# EUROPEAN PATENT APPLICATION

(11) **EP 4 597 095 A1**
(43) Date of publication of application: **06.08.2025**
(21) Application number: 25153245.3
(22) Date of filing: 22.01.2025
(51) Int. Cl.: G01N 27/83, H01F 7/02

(54) **METHOD OF RADIAL LAYOUT OF WEAK MAGNETIC ENERGY PRODUCT OF FERROMAGNETIC MATERIAL**

(30) Priority: 04.02.2024 CN 202410157545
(71) Applicant: Dou, Bolin, Luoyang, Henan 471003 (CN); Dou, Chenchen, Luoyang, Henan 471003 (CN); Chang, Yiyun, Luoyang, Henan 471003 (CN)
(72) Inventor: Dou, Bolin, Luoyang, Henan 471003 (CN); Dou, Chenchen, Luoyang, Henan 471003 (CN); Chang, Yiyun, Luoyang, Henan 471003 (CN)
(74) Representative: Kolster Oy Ab

(57) **Abstract**

The present invention discloses a method of radial layout of weak magnetic energy product of ferromagnetic material, which relates to the technical field of the electromagnetic nondestructive flaw detection of radial layout with weak magnetic energy product of ferromagnetic materials. The technical process includes: composing a weak magnetic energy product radial layout magnetic device by a permanent magnet excitation member; moving a ferromagnetic material and the magnetic device relatively; removing stray magnetic fields randomly formed in a process of manufacturing, transportation, installation, and use of the ferromagnetic material to be measured; transforming the ferromagnetic material from a magnetic neutral state to a weak magnetic energy product state; and constructing a stable memory magnetic field in the ferromagnetic material. The present invention can create a necessary precondition of the equipotential weak magnetic energy product distribution feature for the weak magnetic nondestructive flaw detection of the ferromagnetic material. It has the advantages of a stable and reliable equipotential weak magnetic energy product radial layout condition, a good consistency of the underlying information condition of the ferromagnetic material to be measured, a higher efficiency of the weak magnetic detection, stable and reliable data, a wider applicability, a higher safety, a smaller size, a light weight, a simple structure, and a lower cost.

## Description

### TECHNICAL FIELD

The present invention relates to the technical field of the electromagnetic non-destructive flaw detection with radial layout of weak magnetic energy product of ferromagnetic materials, and specifically to a method of radial layout of weak magnetic energy product of ferromagnetic material.

### BACKGROUND ART

The electromagnetic detection method is a commonly used method to detect ferromagnetic materials at present, wherein the more widely used is leakage magnetic detection method, i.e., the fracture damage state is determined by measuring a surface leakage magnetic field of the ferromagnetic material. The change of the surface magnetic field at the defect of the ferromagnetic material depends on the intensity of the applied magnetic field. When the applied magnetic field intensity reaches the saturation or supersaturation value, theoretically, the damage degree can be determined according to the change of the leakage magnetic field intensity on the surface of the ferromagnetic material. However, long-term application practice at home and abroad shows that the strong magnetic detection method represented by the magnetic leakage principle is difficult to realize the quantitative detection for the ferromagnetic material.

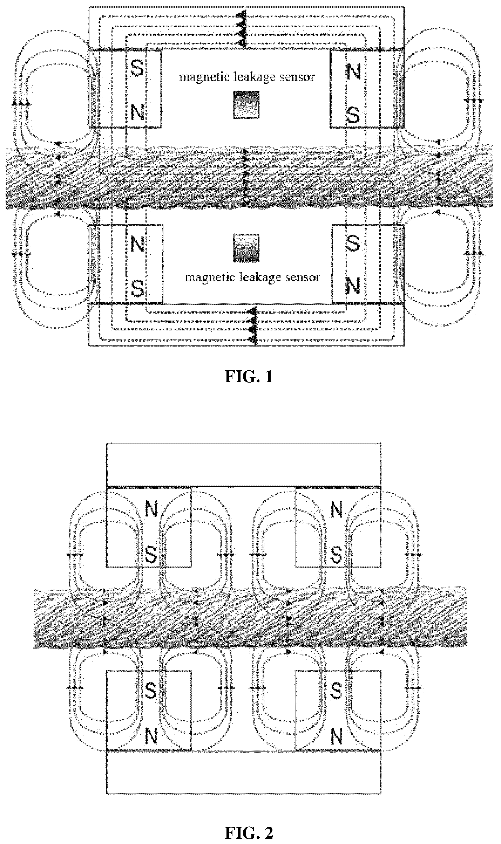

In the traditional strong magnetic detection method, the excitation technologies all adopt the axial double-ring multi-loop excitation method (as shown in FIG. 1), and in recent years, the researches on the radial multi-ring multi-loop excitation method (as shown in FIG. 2) also appear. The axial excitation method has problems of the low excitation efficiency, high energy consumption, bulky excitation device structure, large volume, unstable detection result, great influence by running speed of the ferromagnetic material, and both the acceleration and deceleration affecting the test result. The radial multi-ring multi-loop excitation method is still in the research stage, and it is theoretically improved compared with the axial excitation method. However, due to the limitation of the multi-loop layout method, it still has the problems of the large device volume, bulky structure, higher cost, and repeated excitation and degaussing. In view of this, the present invention is provided.

### SUMMARY

The object of the present invention is to provide a method of radial layout of weak magnetic energy product of ferromagnetic material to solve the above long-standing technical difficulties.

It should be understood that the following contents only illustrate the main features of the present invention. For persons of ordinary skill in the field, other relevant combinations can be obtained based on these main features without inventive efforts. Therefore, the specification should not be regarded as a limitation of the scope of protection of rights.

The present invention can be realized in the following ways.

In a first aspect, the present invention provides a weak magnetic energy product radial layout magnetic device composed of a permanent magnet excitation member, wherein the weak magnetic energy product radial layout magnetic device includes at least one permanent magnet excitation member, and if the weak magnetic energy product radial layout magnetic device is composed of a plurality (at least 2) of permanent magnet excitation members, all the permanent magnet excitation members together compose a magnetic device which is formed by a radial weak magnetic energy product and can move relative to a ferromagnetic material to be measured. The excitation region covered by the weak magnetic energy product radial layout magnetic device is used to provide the ferromagnetic material to be measured with an airspace composite radial magnetic field.

In an optional embodiment, the weak magnetic energy product radial layout magnetic device is integrally composed of a single-ring, a single-group, or a single-side single-group radial permanent magnet excitation member; a structure form of the permanent magnet excitation member includes a single-side single-group layout form, a double-edge single-group symmetrical layout form, a U-shaped single-ring single-group layout form, or an annular single-ring single-group layout form; and a material of the permanent magnet excitation members includes at least one of a strip, a block, a sector, a semicircle, an ellipsoid, a U-shape, or a circular body.

In an optional embodiment, the permanent magnet excitation member is composed of a magnet that can integrally or partially surround the ferromagnetic material to be measured, wherein the magnet includes at least one of the strip, block, sector, semicircle, ellipsoid, U-shape, or circular body.

In an optional embodiment, a magnet inside the weak magnetic energy product radial layout magnetic device is in the form of a single-side single-ring symmetrical method.

In an optional embodiment, magnetic pole directions of the weak magnetic energy product radial layout magnetic device exhibited in the specific physical form are respectively:
"S pole →N pole →ferromagnetic material to be measured← N pole← S pole";
"N pole →S pole →ferromagnetic material to be measured← S pole← N pole";
"S pole →N pole →ferromagnetic material to be measured →S pole →N pole";
"N pole →S pole →ferromagnetic material to be measured →N pole →S pole";
"N pole →S pole →ferromagnetic material to be measured"; or "S pole →N pole →ferromagnetic material to be measured".

In a second aspect, the present invention provides a method of radial layout of weak magnetic energy product of ferromagnetic material, including the following steps: moving the ferromagnetic material to be measured and the weak magnetic energy product radial layout magnetic device relatively by adopting the weak magnetic energy product radial layout magnetic device according to any one of the foregoing embodiments; removing internal and external stray magnetic fields or interference magnetic fields randomly formed in the process of manufacturing, transportation, installation, and use of the ferromagnetic material to be measured; transforming the ferromagnetic material to be measured from a magnetic neutral state to a weak magnetic energy product state; and constructing an artificial, stable and durable memory magnetic field in the ferromagnetic material to be measured, so as to provide the weak magnetic non-destructive flaw detection of the ferromagnetic material with a stable and necessary precondition. Without this precondition, there is no significant advantage over the prior arts.

In an optional embodiment, the method of moving the ferromagnetic material and the magnetic device relatively includes: keeping the weak magnetic energy product radial layout magnetic device static, so that the ferromagnetic material to be measured passes through the excitation region of the weak magnetic energy product radial layout magnetic device; or keeping the ferromagnetic material to be measured static, and moving the weak magnetic energy product radial layout magnetic device, so that the ferromagnetic material to be measured passes through the excitation region of the weak magnetic energy product radial layout magnetic device.

In an optional embodiment, the method of radial layout of weak magnetic energy product of ferromagnetic material includes:
S1: relatively passing the ferromagnetic material to be measured through a quantitative magnetic field provided by the weak magnetic energy product radial layout magnetic device, wherein each volume element of the ferromagnetic material to be measured sequentially completes the process of radial quantitative sorting under the condition that the magnetic field provided by the weak magnetic energy product radial layout magnetic device is radially applied to the ferromagnetic material to be measured;
S2: gradually withdrawing the ferromagnetic material from the magnetic device, so that each volume element of the ferromagnetic material sequentially enters a demagnetization process; and
S3: controlling the magnetic aging timeliness of the ferromagnetic material to be measured that enters the demagnetization process, so that the ferromagnetic material to be measured transforms from the magnetic neutral state to the weak magnetic energy product state, and the equipotential steady state weak magnetic energy product distribution feature is obtained.

The equipotential steady state weak magnetic energy product distribution includes at least one of the following features:
feature 1: a magnetic field intensity on a surface of a non-defective part of the ferromagnetic material to be measured <1mT;
feature 2: a magnetic field intensity on a surface of a defective part of the ferromagnetic material to be measured ≥1mT, depending on the degree of a defect; or
feature 3: a magnetic field intensity inside a defect of the ferromagnetic material to be measured > 1mT, depending on a severity of the defect and a depth of its position.

In an optional embodiment, the ferromagnetic material to be measured includes at least one of a steel wire rope, a continuous oil pipe, an oil and gas pipeline, a pressure pipeline, a railroad guide rail, a steel plate, and an elongated ferromagnetic material.

The present invention includes the following beneficial effects.

The present invention provides a new method of radial layout of weak magnetic energy product of ferromagnetic material, wherein the magnetic device of the method has a compact structure, a small volume, a light weight, a low energy consumption, and no strong magnetic pollution, and can provide the necessary precondition for the realization of the high-efficiency, high-precision, low misjudgment rate weak magnetic non-destructive flaw detection technology under the complex working conditions. Moreover, by utilizing the radial excitation performance of the magnetic device, it provides a new practical basis for realizing quantitative magnetic loading of the ferromagnetic material. This method can promote the rapid completion of the steady state magnetic energy product process of the ferromagnetic material, and creates a new technical means for realizing the on-line, real-time, and automatic detection for ferromagnetic material.

### BRIEF DESCRIPTION OF DRAWINGS

In order to more clearly illustrate the technical solutions in the embodiments of the present invention, the following will briefly introduce the drawings to be used in the embodiments. It is to be understood that the following drawings illustrate only certain embodiments of the present invention, and therefore should not be regarded as a limitation of the scope. For persons of ordinary skill in the field, other relevant drawings can be obtained based on these drawings without inventive efforts.
FIG. 1 shows a schematic diagram of a double-ring axial excitation method in the prior art;
FIG. 2 shows a schematic diagram of a multi-ring multi-loop excitation method in the prior art;
FIG. 3 shows a schematic diagram of different excitation regions in the present invention;
FIG. 4 shows a schematic diagram of radial excitation sections in different directions in the present invention;
FIG. 5 shows a relationship diagram between a thickness of the magnet and a magnetic field intensity at different positions of the radial magnetic device of the present invention;
FIG. 6 shows a relationship diagram between a length of the magnet and a magnetic field intensity at different positions of the radial magnetic device of the present invention;
FIG. 7 shows a simulation vector diagram of a single-ring single-body radial excitation loading weak magnetic state field of Embodiment 3;
FIG. 8 shows a simulation cloud diagram of a single-ring single-body radial excitation loading weak magnetic state field of Embodiment 3;
FIG. 9 shows a simulation cloud diagram of a double ring axial excitation loading weak magnetic state field of Embodiment 3;
FIG. 10 shows a structure model schematic diagram of a three-dimensional weak magnetic energy product radial magnetic device of Embodiment 3; and
FIG. 11 shows a schematic diagram of the formation principle of a "memory magnetic field" of a low-order magnetic energy product of Embodiment 3.

Reference numbers: 10-ferromagnetic material; 20-magnetic device; 40-excitation region.

### DETAILED DESCRIPTION OF EMBODIMENTS

In order to make the purpose, technical solutions, and advantages of the embodiments of the present invention clearer, the technical solutions in the embodiments of the present invention will be clearly and completely described below. Where specific conditions are not indicated in the embodiments, they shall be performed in accordance with conventional conditions or those recommended by the manufacturer. The reagents or instruments used without indication of the manufacturer, are the conventional products that can be purchased commercially.

The features and performance of the present invention are described in further detail below in connection with embodiments.

The following is a specific description of a magnetic device and a method of radial layout of weak magnetic energy product of ferromagnetic material provided by the present invention.

In the prior art, the axial excitation or radial multi-ring multi-loop excitation is mainly provided by the magnetic conductive material, the excitation member, and the armature together.

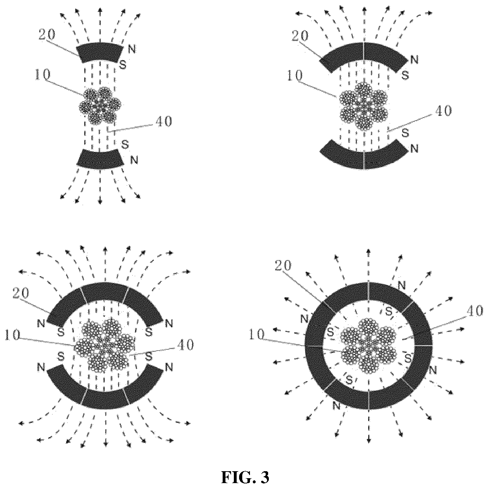

The present invention provides a magnetic device 20, and the magnetic device includes at least one excitation member. All excitation members together form an excitation region 40 (as shown in (a) to (d) of FIG. 3) with an airspace three-dimensional composite radial magnetic field distribution, wherein the excitation region is used to provide a ferromagnetic material 10 with an airspace composite radial magnetic field.

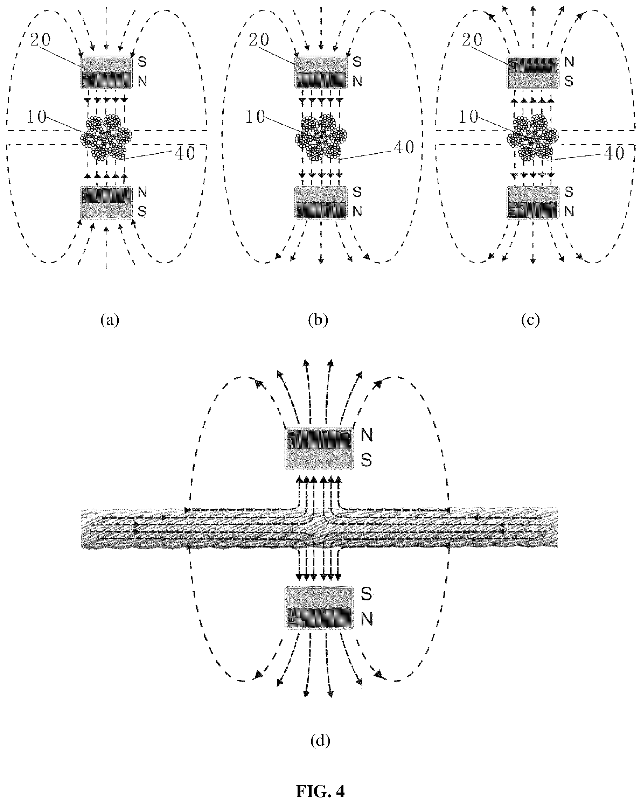

According to different polarities of the excitation member, the above excitation directions, for example, can include: S pole →N pole -ferromagnetic material← N pole← S pole direction, N pole →S pole -ferromagnetic material← S pole← N pole direction, or S pole →N pole -ferromagnetic material →S pole →N pole direction (as shown in (a) to (c) of FIG. 4).

As a reference, all excitation members in the magnetic device 20 as a whole, exemplarily but not limitingly, can include a single-side single-group layout form, a double-edge single-group symmetrical layout form, a U-shaped single-ring single-group layout form, or an annular single-ring single-group layout form.

The optional form of the excitation members includes at least one of a strip, a block, a sector, a semicircle, an ellipsoid, a U-shape, or a circular body, that is, the excitation members can be composed of the same form or can be different forms. In some embodiments, the excitation region is provided by the magnetic device 20, such as a sector magnet, a ring magnet, a U-shaped magnet, or a rectangular magnet, that can integrally or partially surround the ferromagnetic material.

In the present invention, taking the magnetic device 20 in the form of a single ring single body as an example, the magnetic device 20, for example, can be formed by 1-12 excitation members. Along the circumferential direction of the magnetic device 20, it can provide one excitation member every 360°C (i.e. the magnetic device 20 is composed of one excitation member); it can provide one excitation member every 180°C (i.e. the magnetic device 20 is composed of two excitation members); it can provide one excitation member every 120°C (i.e. the magnetic device 20 is composed of three excitation members); it can provide one excitation member every 90°C (i.e. the magnetic device 20 is composed of four excitation members); it can provide one excitation member every 60°C (i.e. the magnetic device 20 is composed of six excitation members); or it can provide one excitation member every 30°C (i.e. the magnetic device 20 is composed of 12 excitation members). Additionally, the number of excitation parts can be adjusted according to actual needs.

In some embodiments, the magnetic device 20 can be provided at least one or multiple excitation member in its length, width, and thickness directions by using the method of arrangement and combination, which need to be arranged and combined according to the diameter of the ferromagnetic material.

Accordingly, the formed excitation region 40 can be an annulus, a rectangle, or a combination body. The magnetic field will apply a radial excitation to the ferromagnetic material along the radial direction of the magnetic device.

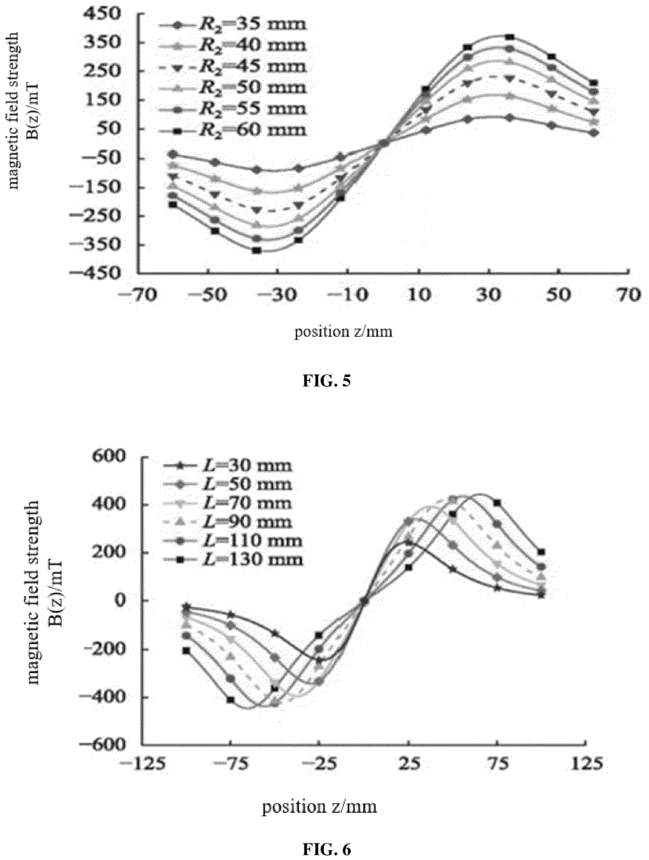

It is to be noted that the excitation region 40 and magnetic field intensity thereof increase proportionally with the increases of the thickness, the length, and the width of the excitation member. After the magnetic field theory analysis, it is concluded that the key parameters affecting the radial magnetic field distribution are mainly the thickness, length, and width of the magnet. As shown in FIG. 5, when the abscissa position of the peak value of the magnetic field intensity remains unchanged, the magnetic field intensity increases with the increase of the thickness of the magnet. As shown in FIG. 6, as the length increases, a distance between the two peak values of the magnetic field intensity becomes farther, and the magnetic field intensity becomes larger.

In some embodiments, the magnetic pole direction of the permanent magnet excitation member shall be perpendicular to the ferromagnetic material axially passing through or across the magnetic device. The center magnetic field intensity of the magnetic device in the air (when not passing through the ferromagnetic material) is usually 15mT to 2T depending on the diameter of the ferromagnetic material. When the ferromagnetic material 10 is placed into the magnetic device 20, one section of the ferromagnetic material 10 can be surrounded in the magnetic field space.

According to the above, the magnetic device 20 provided by the present invention has a compact structure, a smaller volume, a smaller weight, a low energy consumption, and no strong magnetic pollution. It can realize the excitation effect of high efficiency, high precision, and low misjudgment rate under the complex working condition environment, and create a necessary precondition for the weak magnetic detection.

Accordingly, the present invention provides a method of radial layout and loading of weak magnetic energy product of the ferromagnetic material, which can solve the technical defects of the prior electromagnetic detection. The method constructs an analytical model of excitation of the ferromagnetic material based on Maxwell (a simulation software) according to different excitation methods, and gives key indicators such as the length and thickness, of the magnetic device 20 used. By utilizing the three-dimensional radial excitation performance of the magnetic device 20 (especially the single-ring single-body quantitative magnetic device), it provides a new method for quantitative magnetic loading and testing of the ferromagnetic material 10, which can promote the rapid realization of the steady state magnetic energy product process of the ferromagnetic material 10 and improve the excitation efficiency.

As a reference, the method can include the following steps: removing the stray magnetic fields of the ferromagnetic material to be measured randomly generated outside or distributed inside during the process of processing, manufacturing, transportation, installation, and use by using the above magnetic device 20; and transforming the ferromagnetic material 10 from a magnetic neutral state to a weak magnetic energy product state to form a complete steady state spatial memory magnetic field, so as to provide a precondition for the subsequent weak magnetic non-destructive detection of the ferromagnetic material. The ferromagnetic material magnetized by this method is in an equipotential steady state weak magnetic energy product state. The more serious the defective damage state of the ferromagnetic material is, the more prominent the difference in the magnetic energy potential is, and the larger the corresponding surface and internal magnetic field intensity is.

The ferromagnetic material 10 can include the steel, iron, and other ferroalloy materials with a medium or high carbon content, and specifically can be, but is not limited to at least one of the steel wire rope, oil pipe, gas pipeline, continuous oil pipe, railroad guide rail, and pressure pipeline.

In some typical embodiments, the magnetic device 20 is a radial quantitative magnetic device in the form of a single ring.

In other words, the above process of forming a steady state memory magnetic field is a radial layout loading process, wherein the magnetic device 20 continuously and uniformly performs the radial magnetic loading in the radial direction to each unit volume element of the ferromagnetic material 10; removing the internal and external stray magnetic fields of the ferromagnetic material 10 randomly generated or existed in itself during the process of processing, manufacturing, transportation, installation, and use by the magnetic device 20; and adjusting the thickness, width, and length of the magnetic device 20, so that the ferromagnetic material 10 is transformed from the neutral state to the weak magnetic energy product sate, so as to form the steady state memory magnetic field. This process establishes a stable memory magnetic field in ferromagnetic material 10 by utilizing the human intervention, so as to create a necessary precondition for realizing the non-destructive flaw detection of the weak magnetic sensing technology.

The above "volume element" can be understood as a series of volume differentials of the ferromagnetic material 10 in the radial direction.

In the present invention, the method of moving the ferromagnetic material 10 and the magnetic device 20 relatively includes: keeping the magnetic device static 20, so that the ferromagnetic material 10 passes through the excitation region 40 of the magnetic device 20; or keeping the ferromagnetic material 10 static, and moving the magnetic device 20, so that the ferromagnetic material 10 passes through the excitation region 40 of the magnetic device 20.

The above ferromagnetic material 10 is placed at the center of the excitation region 40, so as to be affected by the radial magnetic field, and the thickness, width, and length of the magnetic device 20 are adjusted as required, so as to optimize the excitation effect.

More specifically, the above excitation loading can include the following steps: S1~S3.

S1: relatively passing the ferromagnetic material 10 through the magnetic field provided by the magnetic device 20, wherein each volume element of the ferromagnetic material 10 sequentially completes the process of radial quantitative sorting under the condition that the magnetic field provided by the magnetic device 20 is radially applied to the ferromagnetic material 10

As a reference, taking the magnetic device 20 as a single-ring radial quantitative magnetic device 20, it forms a finite-length three-dimensional magnetic field airspace, During the operation, the magnetic device 20 keeps in a constant state and the ferromagnetic material 10 moves, or the ferromagnetic material 10 keeps in a constant state and the magnetic device 20 is moves, so that the volume elements of the ferromagnetic material 10 entering the single-ring radial quantitative magnetic device 20 can receive the same degree of quantitative magnetic force loading except the volume elements at two ends, so as to realize the stable and uniform layout of the radial weak magnetic energy product in the middle part of the test member.

It is to be noted that the single-ring radial quantitative magnetic device 20 rapidly magnetizes the volume elements of the ferromagnetic material 10 entering it, and at the end of the sharp magnetization, the permeability reaches a maximum value and remains stable.

S2: withdrawing the ferromagnetic material 10 from the magnetic device 20, so that each volume element of the ferromagnetic material 10 sequentially enters a demagnetization process.

S3: controlling the magnetic aging duration timeliness of the ferromagnetic material 10 that enters the demagnetization process, which protects the external magnetic field or the stray magnetic field of the weak magnetic signal on the ferromagnetic material 10 from being perturbed, so that the ferromagnetic material 10 transforms from the magnetic neutral state to the weak magnetic energy product state, and the equipotential steady state weak magnetic energy product distribution feature is obtained. The equipotential steady state weak magnetic energy product distribution feature is:
1) the magnetic field intensity on the surface of the non-defective part of the ferromagnetic material 10 <1mT;
2) the magnetic field intensity on the surface of the defective part of the ferromagnetic material to be measured 10 ≥1mT, depending on the degree of the defect; or
3) the magnetic field intensity inside the defect of the ferromagnetic material to be measured 10 > 1mT, depending on a severity of the defect and the depth of its position.

As a reference, when the magnetic aging duration is smaller than a preset value of the magnetic aging fast-change duration, the magnetic aging duration difference is controlled to be <5s, or when the magnetic aging duration is larger than a preset value of the magnetic aging fast-change duration, the weak magnetic detection for the ferromagnetic material 10 is performed before the weak magnetic signal is decreased to 1 GS in the magnetic aging duration, wherein the magnetic aging duration is an interval duration from the beginning of the loading magnetic field withdrawal to the weak magnetic detection sampling, and the magnetic aging duration difference is a difference of magnetic aging durations of two volume elements of the ferromagnetic material 10.

For one volume element, the effect of the initial stage of magnetic aging on the stability of the magnetic energy product is controlled using the preset value of the magnetic aging fast-change duration.

As an example, the factors disturbing the above weak magnetic signal can include, exemplarily but non-limitingly, a stronger external magnetic field, mechanical stress, and localized high temperature, etc.

The features and performance of the present invention are described in further detail below in connection with embodiments.

### Embodiment 1

The embodiment provided a magnetic device 20, as shown in (d) in FIG. 3. It was in the form of a single ring formed by 8 magnets along a plastic skeleton, wherein an excitation region 40 with a three-dimensional spatial radial magnetic field distribution was formed inside, and the excitation direction was in the N-S direction. The ferromagnetic material 10 was used to pass through the excitation region 40 of the magnetic device 20 and to ensure that the direction of the magnetic field was unfolded radially along the ferromagnetic material 10.

The magnetic device 20 had an inner diameter of 100 mm and an outer diameter of 160 mm, and was a rare earth permanent magnet.

### Embodiment 2

The embodiment provided a method of radial layout excitation loading of weak magnetic energy product of the ferromagnetic material 10.

The elongated test member of the ferromagnetic material 10 performing the weak magnetic energy product radial layout in the embodiment was a steel wire rope, wherein its specifications was that each steel wire rope was consisted of 6 strands; each strand was consisted of 36 steel wires; and each steel wire rope was 18mm in diameter. The depth of the notch of steel wire rope was 5mm, the width was 3mm, and the material was 45 steel. When the test member passed through the single-ring radial quantitative magnetic device 20 provided in Embodiment 1 (i.e., the quantitative excitation loading and adaptive load release process), the trajectory was consistent with the center axis of the single-ring radial quantitative magnetic device 20.

Notes: the maximum relative permeability µₘ = 583 and H _{µm} = 960 A/m for the 45 steel in the cold-drawn condition, where H _{µm} represents the magnetic field intensity corresponding to the maximum permeability µₘ of the ferromagnetic material 10.

All test members passing through the single-ring radial quantitative magnetic device 20 took 15s (/ΔT/ <15s), and the single-ring radial quantitative magnetic device 20 was moved to a remote location after finished to avoid the disturbance of the weak magnetic signal on the test member. Since each unit volume element of the middle part of the test member (the effective part without affection by the end poles) was loaded by the quantitative magnetic force and the adaptive magnetic release action was the same, their initial weak magnetic states were exactly the same, and the magnetic aging duration T <δ (δ=25min). Therefore, the weak magnetic energy product detection could be performed at any time by using the synchronous operation method.

After the fast-change duration of 25 min of magnetic aging, i.e., T>δ (δ=25min), K/ΔT/=100/ΔT/<Tmin=25min <T̅, the magnetic energy (BH) product at each position in the middle section of the test member was measured to be 7.8 J/m³ with a positive or negative deviation of <1%. At this time, it could meet the needs of weak magnetic energy product detection whether the synchronous or asynchronous operation mode,

Note 1: For a certain volume element, the duration from loading the magnetic field withdrawal until the weak magnetic detection sampling was the magnetic aging duration (T). Depending on the object of action, the influence of the initial stage of magnetic aging on the stability of the magnetic energy product was controlled by using the preset value of the magnetic aging fast-change duration δ. For some two volume elements, the difference in their magnetic aging duration lengths was a duration difference (ΔT). The influence of the magnetic aging duration difference on the consistency of the magnetic energy product on different volume elements was controlled by using a multiplier set value (K) of the average value of the magnetic aging duration T̅ to the period difference ΔT. BH was the magnetic energy product. In the absence of defects, the magnetic state of the test member showed an equal (BH) product of each volume element.

Note 2: in the embodiment, the weak magnetic energy product radial layout of the ferromagnetic material 10 was completed by controlling the magnetic aging > 5s, wherein this method could be applied to two operation modes of excitation synchronous and asynchronous detections.

Note 3: the excitation synchronous and asynchronous detections can also be controlled by the magnetic aging < 5s. When the magnetic aging duration is larger than a preset value of the magnetic aging fast-change duration, the weak magnetic detection for the ferromagnetic member is performed before the weak magnetic signal is decreased to 1Gs in the magnetic aging duration. The specific embodiment is to maintain a fixed relative distance between the magnetic device 20 and the subsequent detection device, so that the duration difference between the measured ferromagnetic material 10 passing through the magnetic device 20 and the detection device is always kept at <1 min. Therefore, when the ferromagnetic material 10 reaches the detection device after the weak magnetic energy product radial layout of the magnetic device 20, the magnetic energy product of each volume element is relatively stable.

After the weak magnetic energy product radial distribution excitation loading was applied on the test member according to the above process method, the difference (there was no difference when there was no defect) in the magnetic state with a quantitative-value exchange relationship with the material and structure defect was established on the test member, and it was not affected by the original structure of the material and the depth of the defect location, which provided a prerequisite guarantee for the weak magnetic detection method. It not only realized the base noise free detection, high signal sensitivity, good stability, and excellent detection performance, but also realized the energy saving for the detection device.

### Embodiment 3

The embodiment provided the weak magnetic state simulations and the weak magnetic experimental test comparison loaded by the single-ring radial excitation and loaded by the double-ring axial excitation. The diameter of the steel wire rope was 18mm; each steel wire rope was consisted of 6 strands; and each strand was consisted of 36 steel wires. 12 steel wires were cut at the defective part, wherein the depth of the notch was 5mm, and the width of the notch was 3mm.

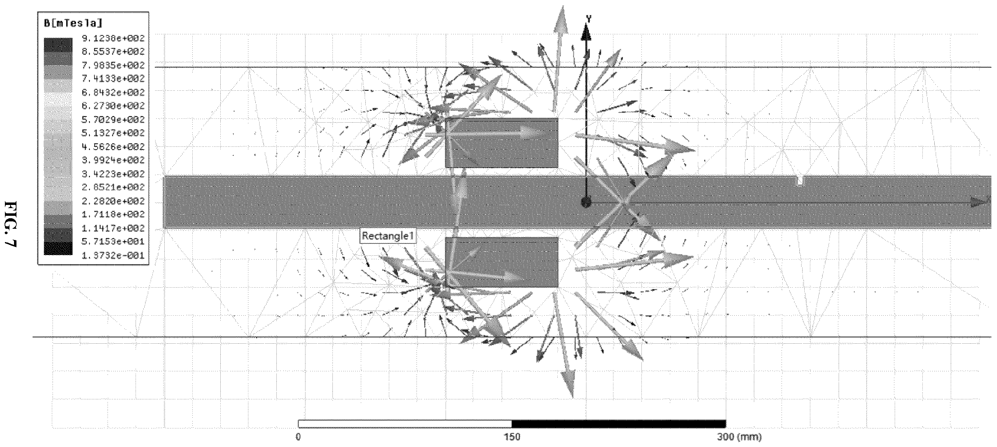

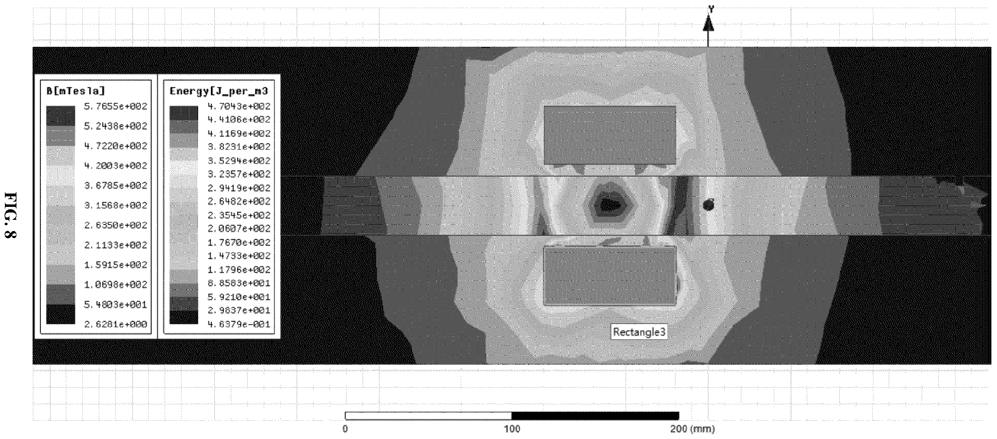

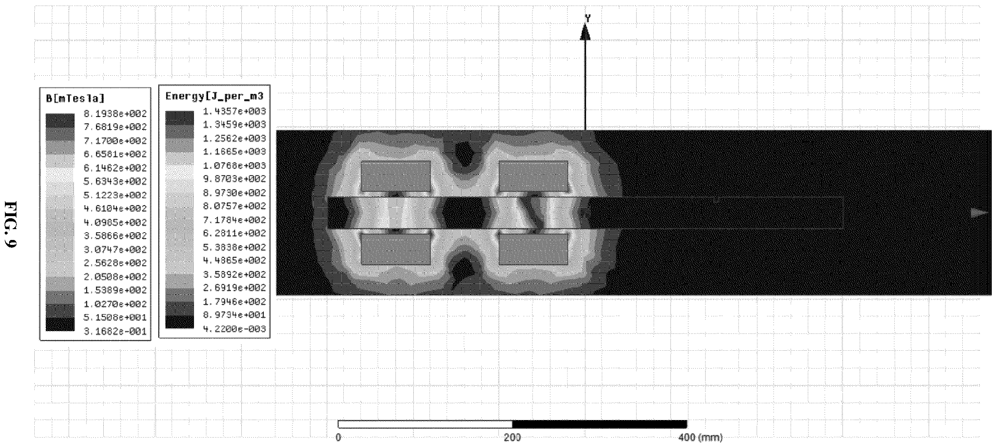

The comparison between the single-ring radial excitation loading weak magnetic state simulation test and the double-ring axial excitation loading weak magnetic state simulation test is that FIG. 7 is a simulation vector diagram of the single-ring radial excitation loading weak magnetic state field; FIG. 8 is a simulation cloud diagram of the single-ring radial excitation loading weak magnetic state field; and FIG. 9 is a simulation cloud diagram of the double-ring axial excitation loading weak magnetic state field.

The comparison between the single-ring radial excitation loading weak magnetic state experimental test and the double-ring axial excitation loading weak magnetic state experimental test was below. The excitation loading device did not move; two ends of the steel wire rope were defined as A end and B end; the steel wire ropes passed through the magnetic device from A end to B end; the steel wire rope was in the weak magnetic state; the Tesla meter was placed at the bottom of the notch for test. The magnetic field intensity inside the notch was 112.8mT; and the magnetic field intensity of the notch on the surface of the steel wire rope was 13.8mT.

The comparison of weak magnetic states (operated by the single-ring radial excitation loading device D-RC65 and the double-ring axial excitation loading device S-RC65) is shown in Table 1.

**Table 1 Comparison of weak magnetic state**

| Comparison and Item | Magnetic field intensity inside the notch of steel wire rope (mT) | Magnetic field intensity on the surface of the notch of steel wire rope (mT) | A-end magnetic pole (mT) | B-end magnetic pole (mT) |
|---|---|---|---|---|
| D-RC65 single-ring radial magnetic device N-N | SN117 | SN12 | N32 | S33 |
| S-RC65 double-ring axial excitation loading device | NS112.8 | SN13.8 | S39 | N39.1 |

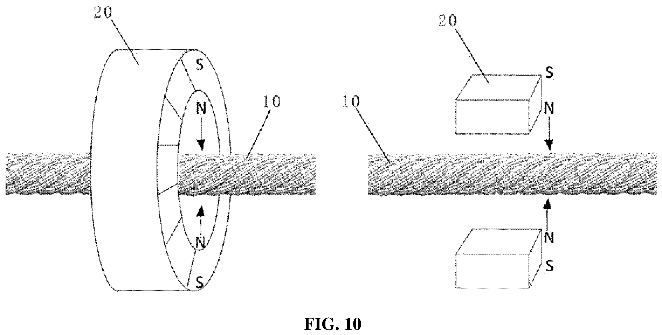

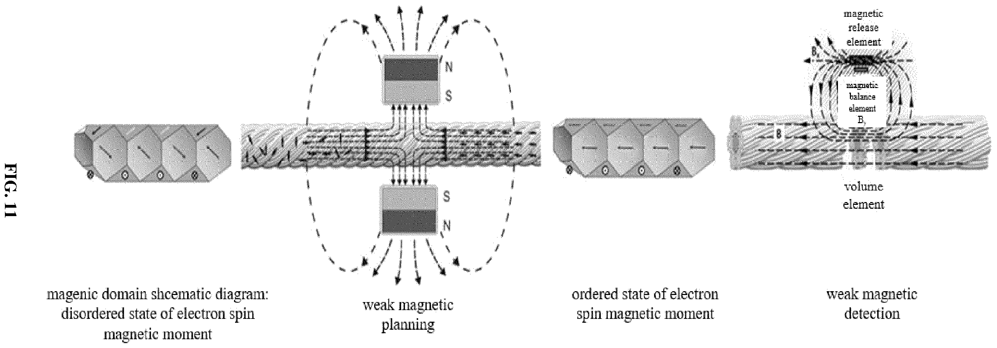

Based on the comparative analysis of simulation experiments of the single-loop radial magnetization method, the single and double loops, multi loop, and other magnetic circuit structures, the weak magnetic energy product radial layout loading method adopted the three-dimensional radial structure mode. The structure model is shown in FIG. 10, wherein the annular poles of the radial magnetization loop are distributed around the ferromagnetic material 10, so as to form a magnetic field pathway for the radial pole. When the ferromagnetic material 10 passes through the radial excitation region 40, it undergoes a sharp magnetization, which changes the domain wall position and the magnetic domain structure of the magnetic domain in the material, so that the "vector" of the electronic magnetic moment in the magnetic domain is transformed from the disordered state to the orderly change and movement, so as to establish a "memory magnetic field" with a low-order magnetic energy product in the ferromagnetic material 10, as shown in FIG. 11. The memory magnetic field will not disappear with the withdrawal of the external magnetic field, and it will be stable for a long time if there is no the sharp demagnetization.

In summary, the present invention provides an equipotential weak magnetic energy product distribution feature for the ferromagnetic material 10, wherein the differentiated information of the magnetic state of each volume element reflects the variations in performances of materials and structures inside and outside the ferromagnetic material 10, so as to provide the precondition for the weak magnetic detection.

The weak magnetic detection for the ferromagnetic material 10 is a non-destructive flaw detection method realized by using the technical features of the present invention and the ferromagnetic performance of the material itself. The advantages are the high detection effect, scientific and reliable data, and lower technology cost. Due to the guarantee of the technical solutions of the present invention, the defects of the ferromagnetic loading material and structure caused by the stress and strain or of tension, bending, torsion, and compression, or the equivalent action can be objectively reflected by the difference in the magnetic state of the unit volume element continuously and uniformly distributed along the central axis direction on the ferromagnetic material 10. The qualitative and quantitative relationship of the difference in magnetic state and the defects is not affected by the original structure of the material and the depth of the defect location, which provides an excellent detection performance for the weak magnetic detection method. The weak magnetic detection does not need the traditional magnetization device. The overall size of the device is small, and it is light in weight and is very easy to carry, installation, use, and maintenance.

The above solution effectively prevents the ferromagnetic material 10 in the working state from being polluted by strong magnetism, so that it has better applicability, safety, and energy-saving effect. The weak magnetic energy product radial layout excitation loading and testing method is realized by three technical steps of the quantitative magnetic loading, adaptive release loading, and steady state magnetic energy product, and the magnetic induction intensity of the magnetic field on the surface of ferromagnetic material 10 is measured, so as to finally obtain the equipotential steady state magnetic energy product distribution feature. Compared with the strong magnetization detection technology, the weak magnetic energy product radial layout excitation loading and testing method does not need to pay more attention to how to get a stronger magnetic induction intensity signal, because the magnetic intensity to be realized is relatively easy to obtain, and it is enough to meet the requirement of the weak magnetic detection technology.

The foregoing are merely preferable embodiments of the present invention, and are not configured to limit the present invention. For those skilled in the art, the present invention may have various changes and variations, and any modifications, equivalent replacements, improvements, etc., made within the spirit and principles of the present invention, shall be included within the scope of protection of the present invention.

## Claims

1. A method of radial layout of weak magnetic energy product of ferromagnetic material (10), **characterized by** comprising: composing a weak magnetic energy product radial layout magnetic device (20) by a permanent magnet excitation member; moving a ferromagnetic material (10) to be measured and the weak magnetic energy product radial layout magnetic device (20) relatively; removing stray magnetic fields or interference magnetic fields randomly formed in a process of manufacturing, transportation, installation, and use of the ferromagnetic material (10) to be measured; transforming the ferromagnetic material (10) to be measured from a magnetic neutral state to a weak magnetic energy product state; and constructing an artificial, stable and durable memory magnetic field in the ferromagnetic material (10) to be measured, so as to provide a weak magnetic non-destructive flaw detection of the ferromagnetic material (10) with a necessary precondition.

2. The method of radial layout of weak magnetic energy product of ferromagnetic material (10) according to claim 1, wherein the weak magnetic energy product radial layout magnetic device (20) composed of the permanent magnet excitation member comprises at least one permanent magnet excitation member, wherein when at least two permanent magnet excitation members are provided, all of the permanent magnet excitation members together compose the weak magnetic energy product radial layout magnetic device (20) that can move relatively on the ferromagnetic material (10) to be measured.

3. The method of radial layout of weak magnetic energy product of ferromagnetic material (10) according to claim 1, wherein a method of moving the ferromagnetic material (10) and the radial layout magnetic device (20) relatively comprises: passing the ferromagnetic material (10) to be measured through the weak magnetic energy product radial layout magnetic device (20) to move relatively when the weak magnetic energy product radial layout magnetic device (20) is in a static state; or moving the weak magnetic energy product radial layout magnetic device (20) to pass through the ferromagnetic material (10) to be measured to move relatively when the ferromagnetic material (10) to be measured in a static state.

4. The method of radial layout of weak magnetic energy product of ferromagnetic material (10) according to claim 1, wherein the step of removing stray magnetic fields or interference magnetic fields randomly formed in a process of manufacturing, transportation, installation, and use of the ferromagnetic material (10) to be measured comprises: passing the ferromagnetic material (10) to be measured through a magnetic field provided by the weak magnetic energy product radial layout magnetic device (20), wherein a direction of the magnetic field provided by the weak magnetic energy product radial layout magnetic device (20) is in a radial excitation state; and passing each volume element of the ferromagnetic material (10) to be measured through the weak magnetic energy product radial layout magnetic device (20) sequentially, so as to finish irreversible magnetization of the ferromagnetic material (10) to be measured, wherein a magnetic field intensity of the weak magnetic energy product radial layout magnetic device (20) required for the irreversible magnetization is selected between stages of sharp magnetization and saturation magnetization according to different diameters of ferromagnetic materials (10).

5. The method of radial layout of weak magnetic energy product of ferromagnetic material (10) according to claim 1, wherein the step of transforming the ferromagnetic material (10) to be measured from a magnetic neutral state to a weak magnetic energy product state comprises: gradually withdrawing the ferromagnetic material (10) to be measured from the weak magnetic energy product radial layout magnetic device (20), so that each volume element of the ferromagnetic material (10) to be measured sequentially enters a demagnetization process; and controlling magnetic aging timeliness of the ferromagnetic material (10) to be measured that enters the demagnetization process, so that the ferromagnetic material (10) to be measured transforms from the magnetic neutral state to the weak magnetic energy product state, and an equipotential weak magnetic energy product distribution feature is obtained at the same time, wherein
the equipotential weak magnetic energy product distribution comprises at least one of following features:
feature 1: a magnetic field intensity on a surface of a non-defective part of the ferromagnetic material (10) to be measured <1mT;
feature 2: a magnetic field intensity on a surface of a defective part of the ferromagnetic material (10) to be measured ≥1mT, depending on a degree of defects; and
feature 3: a magnetic field intensity inside the defective part of the ferromagnetic material (10) to be measured> 1mT, depending on a severity of the defects and a depth of positions.

6. The method of radial layout of weak magnetic energy product of ferromagnetic material (10) according to claim 1, wherein the method of constructing an artificial, stable and durable memory magnetic field in the ferromagnetic material (10) to be measured comprises: performing a radial quantitative excitation by an artificially arranged weak magnetic energy product radial layout magnetic device (20) on the ferromagnetic material (10) to be measured, so as to transform the ferromagnetic material (10) to be measured from a magnetic neutral state to a weak magnetic energy product state, so that the ferromagnetic material (10) to be measured is in a durable and stable equipotential weak magnetic energy product state under a condition of no external interference, and a damage or defective part of the ferromagnetic material (10) to be measured forms magnetic energy potential difference information or a memory magnetic field in the weak magnetic energy product state of the ferromagnetic material (10) to be measured, wherein the more prominent the magnetic energy potential difference information is, the more prominent magnetic memory information fed back from the memory magnetic field is, the more severe a damage condition of the ferromagnetic material (10) is.

7. The method of radial layout of weak magnetic energy product of ferromagnetic material (10) according to claim 1, providing a necessary precondition for the weak magnetic non-destructive flaw detection for the ferromagnetic material (10), wherein a necessary precondition and basic condition of the weak magnetic non-destructive flaw detection technology for the ferromagnetic material (10) is to construct a memory magnetic field in the ferromagnetic material (10) to be measured.

8. The method of radial layout of weak magnetic energy product of ferromagnetic material (10) according to claim 2, wherein the weak magnetic energy product radial layout magnetic device (20) is composed of a single-ring, a single-group, or a single-side single-group radial permanent magnet excitation member; a structure form of the permanent magnet excitation member comprises a single-side single-group layout form, a double-edge single-group symmetrical layout form, a U-shaped single-ring single-group layout form, or an annular single-ring single-group layout form; and a material of the permanent magnet excitation member comprises at least one of a strip, a block, a sector, a semicircle, an ellipsoid, a U-shape, or a circular body.

9. The method of radial layout of weak magnetic energy product of ferromagnetic material (10) according to claim 2, wherein a central magnetic field intensity of the weak magnetic energy product radial layout magnetic device (20) in air and without adding of the ferromagnetic material (10) to be measured is between 20mT and 2T.

10. The method of radial layout of weak magnetic energy product of ferromagnetic material (10) according to claim 2, wherein a magnetic pole direction of the weak magnetic energy product radial layout magnetic device (20) is perpendicular to the ferromagnetic material (10) to be measured axially passing through the weak magnetic energy product radial layout magnetic device (20).

11. The method of radial layout of weak magnetic energy product of ferromagnetic material (10) according to claim 2, wherein a magnetic pole direction of the weak magnetic energy product radial layout magnetic device (20) composed of the permanent magnet excitation member exhibited in a specific physical form is respectively:
"S pole →N pole →the ferromagnetic material (10) to be measured← N pole← S pole"; "N pole →S pole →the ferromagnetic material (10) to be measured← S pole← N pole"; "S pole →N pole →the ferromagnetic material (10) to be measured →S pole →N pole"; "N pole →S pole →the ferromagnetic material (10) to be measured →N pole →S pole"; "N pole →S pole →the ferromagnetic material (10) to be measured"; or "S pole →N pole →the ferromagnetic material (10) to be measured".

12. The method of radial layout of weak magnetic energy product of ferromagnetic material (10) according to any one of claims 1-11, wherein the ferromagnetic material (10) to be measured comprises at least one of a steel wire rope, a continuous oil pipe, an oil and gas pipeline, a pressure pipeline, a railroad guide rail, a steel plate, and an elongated ferromagnetic material (10).
